# EUROPEAN PATENT APPLICATION

(11) **EP 1 829 802 A1**
(43) Date of publication of application: **05.09.2007**
(21) Application number: 07103321.1
(22) Date of filing: 01.03.2007
(51) Int. Cl.: B65G 47/244

(54) **Method and Apparatus for Aligning and/or Sorting Items**

(30) Priority: 04.03.2006 DK 200600320
(71) Applicant: Maskin Industri Viborg A/S, 8640 Rodkaersbro (DK)
(72) Inventor: Gregersen, Peter Rask, 8800 Viborg (DK)
(74) Representative: Gregersen, Niels Henrik

(57) **Abstract**

A method and apparatus (2) for aligning and sorting concrete items with predominantly uniform thickness and having sides with different length in pairs, where the concrete items are fed to a conveyor (4) consisting of a number of conveyor belts (6, 8) which are mutually angled as seen in a plane perpendicularly to the conveying direction, and which are moved with different belt speeds or have surfaces with varying friction. In a simple way it hereby becomes possible to achieve a very quiet and precise aligning of concrete items, such as paving stones which are fed the conveyor from bulk. Since they either have mutually different conveying speed or mutually different surface friction, the mutually angled conveyor belts will act on the concrete items with a turning action, so that the concrete items are aligned, supported on a flat side of the conveyor belt having the greatest conveying speed and the greatest surface friction, and with the longest side edge of the items supported by the conveyor belt which is conveying with the least conveying speed or having the least surface friction.

## Description

### Field of the Invention

The present invention concerns a method for aligning and/or sorting items, in particular paving stones, and of the kind indicated in the preamble of claim 1.

The invention also concerns an apparatus for use in performing the method, i.e. for aligning and/or sorting items, particularly paving stones.

### Background of the Invention

Paving stones of concrete are often delivered with rounded or "broken" edges, providing the paving stones with a patinated look which is produced by filling the paving stones into a rotating drum after the hardening so that the edges of the paving stones are broken off by impact by mutual contact during the said drum processing. Subsequently, the paving stones are to be put on pallets again for eventual shipping to the customer - the contractor or the consumer.

Various apparatuses or facilities for aligning paving stones with regard to automatic palletising of the paving stones are known, the apparatuses e.g. including a broad conveyor upon which the paving stones are discharged from bulk, and which includes means which by contact with the paving stones align them rowwise, so that they subsequently may be laterally displaced in rows for forming a pallet layer of paving stones on a base sheet which is pulled away afterwards when the pallet layer has been put in place on an underlying pallet or an underlying pallet layer.

However, prior art apparatuses or facilities for the described purpose are associated with very great environmental noise and dust problems for the surroundings, and not the least working disadvantages for the personnel as a result of the manual handling required by the traditional systems.

### Object of the Invention

The invention has the purpose of providing an improved method for aligning and/or sorting items, particularly paving stones, and which in a simple way makes it possible to avoid the said working environment disadvantages.

### Description of the Invention

The method according to the invention is characterised in that there is used a conveyor consisting of a number of conveyor belts which are mutually angled as seen in a plane perpendicular to the conveying direction, and which are moved with different belt speeds or have surfaces with different friction. In a simple way it hereby becomes possible to achieve a very quiet and precise aligning of concrete items, such as paving stones which are fed to the conveyor from bulk. Since they either have mutually different conveying speed or mutually different surface friction, the mutually angled conveyor belts will act on the concrete items with a turning action, so that the concrete items are aligned, supported on a flat side of the conveyor belt having the greatest conveying speed and the greatest surface friction, and with the longest side edge of the concrete items supported by the conveyor belt which is conveying with the least conveying speed or having the least surface friction.

To this is added that in contrast to traditional systems, the method according to the invention does not require very large dimensional differences in order to function efficiently, i.e. by the invention only very modest dimensional differences are required in order to achieve efficient sorting or aligning of concrete items, e.g. paving stones.

The method according to the invention is preferably further modified in that the mutual angle between the conveyor belts is successively increased, e.g. from a mutual angle of about 90° to a mutual angle of about 180°. Hereby it is ensured that the concrete items will always be turned so that they are supported on the largest surface, even with items with relatively small differences between the dimensions.

By the method according to the invention, it may be further advantageous that after aligning, the conveying speed of the individual concrete items is accelerated by means of a separate conveyor belt in order to provide mutual spacing between the concrete items, and that the items then pass a weighing machine or other measuring means interacting with a sorting device.

According to the invention it may be an advantage that a video camera is used as the second measuring means which compares the shape of the concrete item with a master item.

The invention also concerns an apparatus for aligning and sorting concrete items with predominantly uniform thickness and having sides with different length in pairs, the apparatus including a feeding station arranged to feed the concrete items on a conveyor from bulk, the apparatus being characterised in that the conveyor includes mutually angled conveyor belts which are moved with different belt speeds, or which have surfaces with mutually varying friction.

The apparatus according to the invention is suitably designed so that the mutual angle between the conveyor belts is increased successively, e.g. from a mutual angle of about 90° to a mutual angle of about 180°.

With the intention of optimising the apparatus according to the invention, this may be advantageously designed in such a way that it includes one or more separate belt conveyors which are adapted to accelerate the conveying speed of the concrete items after aligning the individual concrete items in order to provide mutual spacing between the concrete items, and that the apparatus includes a weighing machine which the concrete items are passing subsequently, the weighing machine being control connected with a sorting device.

With the intention of future-proofing the apparatus according to the invention, it may be additionally advantageous if it includes a sorting device adapted to interact with a video camera or other pattern recognition means adapted to concurrently comparing the concrete items with a master item.

### Description of the Drawing

The invention is now described more closely in connection with the drawing, in which:
- Fig. 1: shows a plan view of an embodiment of an apparatus according to the invention;
- Fig. 2: shows a plan view of the apparatus shown in Fig. 1, as seen from below; and
- Fig. 3: shows a perspective view of an embodiment of a sorting facility including a sorting conveyor according to the invention.

### Detailed description of the invention

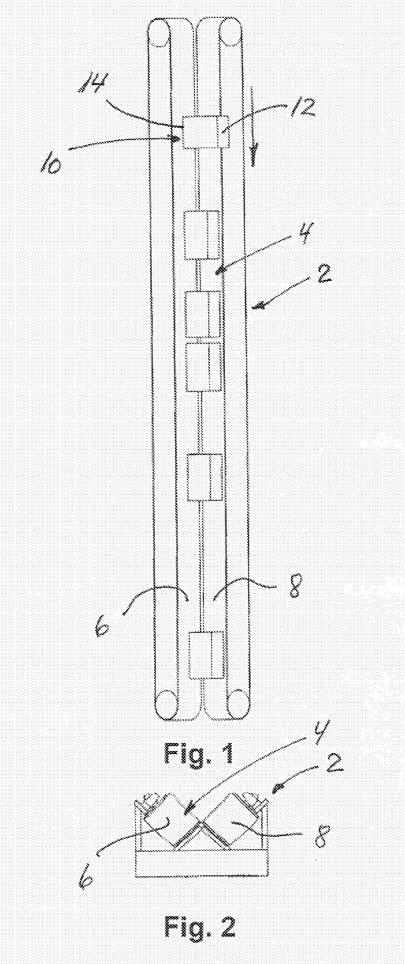

The apparatus 2 shown in Figs. 1 and 2 consists of a conveyor 4 in the form of two mutually angled conveyor belts 6 and 8, either moved with mutually different conveying speed or consisting of belt material having mutually different surface friction.

As shown in position 10 in Fig. 1, a concrete item in the form of a rectangular paving stone 12 which is to be aligned and sorted is placed so that the paving stone 12 is resting with a short side 14 on the conveyor belt 6 moving at the lower speed or which has a surface with lesser friction than the conveyor belt 8. Since the conveyor belt 8 is moving with greater speed or has a surface with greater friction, there will automatically be obtained an aligning of the paving stones 12 as they are moved along the conveyor 4, so that the paving stones 12 are all aligned with a long side in contact with the conveyor belt 6.

The actual difference in conveying speed or surface friction of the conveyor belts 6 and 8 is adapted in such a way that the paving stones 12 do not tend to turn again on the sorting conveyor 4.

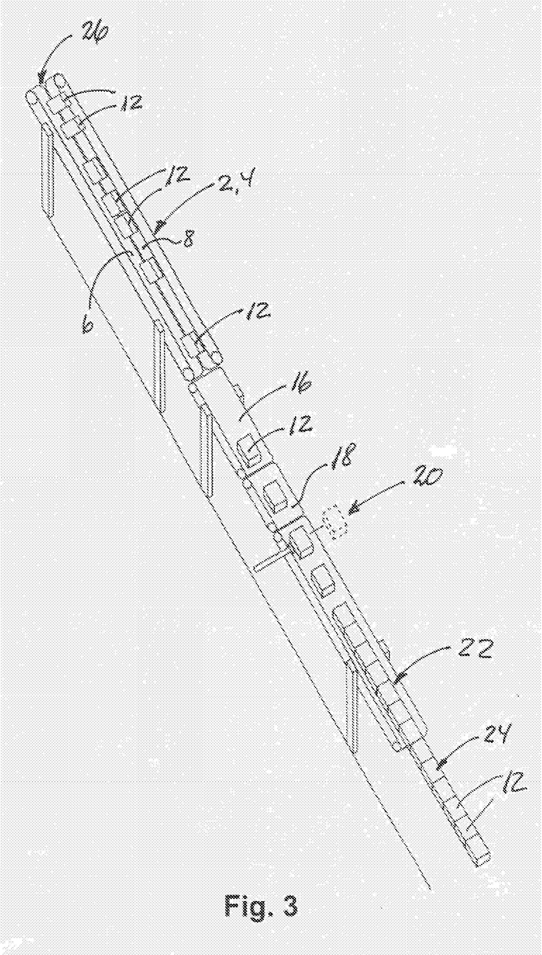

The sorting facility shown in Fig. 3 consists of the following units/sections: An aligning conveyor 4, cf. Figs. 1 and 2, an acceleration track 16; a measuring section 18, e.g. in the form of a weighing section; a sorting unit 20; a formation belt 22; and a not shown palletising section where the aligned and sorted items, e.g. paving stones, are arrayed in a row 24 and packed on pallets, preferably in uniform pallet layers, so that the paving stones may be subsequently handled mechanically by apparatuses which are adapted to handle and lay out entire pallet layers of preferably uniform paving stones.

The sorting facility shown in Fig. 3 functions as follows:

At the top in Fig. 3, paving stones 12 are fed from bulk, preferably individually, in position 26 with arbitrary orientation relative to the conveyor belt 4; as mentioned this consists of two mutually angled conveyor belts 6 and 8, of which the conveyor belt 8 is moving with greater speed than the conveyor belt 6, so that a relative speed difference between the conveyor belts and 8 is established. This means that paving stones 12 which are supplied with directional orientation, cf. position 10 in Fig. 1, will tend to be turned so that the paving stones 12 after turning are supported with a long side edge in contact with the top side of the conveyor belt 6, i.e. the conveyor belt 6 moving with the lower speed.

As alternative to speed difference between conveyor belts 6 and 8, these may have surface coatings with mutually varying friction, as the conveyor belt 8 has the greatest surface friction in order that the friction will be the same as by the described speed difference. In other words, it is automatically ensured that an item, e.g. a paving stone standing on an edge with angle of 45°, will always fall or be guided down upon its largest face, irrespectively of dimensional differences, i.e. a very efficient sorting is achieved.

During the continued transport along the conveyor 4, the paving stones 12 will in other words be aligned in such a way that all paving stones will be supported with a long side on the conveyor belt 6. From the conveyor 4, the paving stones 12 are transferred to an acceleration conveyor 16 which has the purpose of ensuring a certain mutual spacing between the paving stones 12, which subsequently pass a weighing unit 18, e.g. in the form of a weighing machine that registers the actual weight of the paving stones 12. If the weight of a paving stone differs too much from the set value, a subsequent sorting unit 20, e.g. in the form of a transverse piston, will provide for automatic sorting off or discarding of the faulty paving stone 12.

After the sorting unit 20, the paving stones 12 are led to a formation belt 22 where a continuous compact row 24 of aligned paving stones 12 are formed, and which are subsequently packed in a not shown way into uniform pallet layers on pallets so that respective pallet layers may subsequently be handled by machines which are adapted to handle entire pallet layers, e.g. for mechanical laying of paving stones on site.

## Claims

1. A method for aligning and sorting concrete items (12) with predominantly uniform thickness and having sides with different length in pairs, where the concrete items (12) are fed to a conveyor (4), **characterised in that** there is used a conveyor (4) consisting of a number of conveyor belts (6, 8) which are mutually angled as seen in a plane perpendicular to the conveying direction, and which are moved with different belt speeds or have surfaces with different friction.

2. Method according to claim 1, **characterised in that** the mutual angle between the conveyor belts (6, 8) is successively increased, e.g. from a mutual angle of about 90° to a mutual angle of about 180°.

3. Method according to claim 1, **characterised in that** after aligning, the conveying speed of the individual concrete items (12) is accelerated by means of a separate conveyor belt (16) in order to provide mutual spacing between the concrete items (12), and that the items then pass a weighing machine (18) or other measuring means interacting with a sorting device (20).

4. Method according to claim 1 and 3, **characterised in that** a video camera is used as the second measuring means (18) which compares the shape of the item with a master item.

5. An apparatus (2) for aligning and sorting concrete items (12) with predominantly uniform thickness and having sides with different length in pairs, the apparatus (2) including a feeding station arranged to feed the concrete items (12) on a conveyor (4) from bulk, **characterised in that** the conveyor (4) includes mutually angled conveyor belts (6, 8) which are moved with different belt speeds, or which have surfaces with mutually varying friction.

6. Apparatus (2) according to claim 5, **characterised in that** the mutual angle between the conveyor belts (6, 8) is successively increased, e.g. from a mutual angle of about 90° to a mutual angle of about 180°.

7. Apparatus according to claim 5, **characterised in that** it includes one or more separate belt conveyors (16) which are adapted to, after aligning the individual concrete items (12), accelerate the conveying speed in order to provide mutual spacing between the concrete items (12), and that the apparatus includes a weighing machine (18) which the concrete items (12) are passing subsequently, the weighing machine (18) being control connected with a sorting device (20).

8. Apparatus according to claim 5, **characterised in that** it includes a sorting device (20) adapted to interact with a video camera or other pattern recognition means adapted to concurrently comparing the items (12) with a master item.
